(19) **Europäisches Patentamt / European Patent Office / Office européen des brevets**

(11) **EP 4 567 934 A1**

(12) **EUROPEAN PATENT APPLICATION**
published in accordance with Art. 153(4) EPC

(43) Date of publication:
**11.06.2025 Bulletin 2025/24**

(21) Application number: **22953983.8**

(22) Date of filing: **02.08.2022**

(51) International Patent Classification (IPC):
*H01M 4/587* (2010.01)

(52) Cooperative Patent Classification (CPC):
**H01M 4/587;** Y02E 60/10

(86) International application number:
**PCT/JP2022/029714**

(87) International publication number:
**WO 2024/028994 (08.02.2024 Gazette 2024/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Resonac Corporation**
**Tokyo 105-7325 (JP)**

(72) Inventors:
• **ONUMA, Hiroo**
**Tokyo 100-6606 (JP)**
• **MATSUMOTO, Yoshiyuki**
**Tokyo 100-6606 (JP)**
• **TSUCHIYA, Hideyuki**
**Tokyo 100-6606 (JP)**
• **UCHIYAMA, Yoshinori**
**Tokyo 100-6606 (JP)**

(74) Representative: **Berggren Oy**
**P.O. Box 16**
**Eteläinen Rautatiekatu 10A**
**00101 Helsinki (FI)**

(54) **NEGATIVE ELECTRODE MATERIAL FOR LITHIUM ION SECONDARY BATTERY, NEGATIVE ELECTRODE FOR LITHIUM ION SECONDARY BATTERY, AND LITHIUM ION SECONDARY BATTER?**

(57)    A negative electrode material for a lithium-ion secondary battery comprising graphite particles satisfying, in a ratio of R value, which is an intensity ratio Id/Ig of a maximum peak intensity Ig in the range of 1580 cm$^{-1}$ to 1620 cm$^{-1}$ and a maximum peak intensity Id in the range of 1300 cm$^{-1}$ to 1400 cm$^{-1}$ in a Raman spectrum obtained by a Raman spectroscopy measurement, a ratio of the particles with R≥0.2 is 10% by number or more, and an average value of a half width of Id in the top 10 spectra with R values is 60 cm$^{-1}$ or less.

**EP 4 567 934 A1**

## Description

Technical Field

The present invention relates to a negative electrode material for a lithium-ion secondary battery, a negative electrode for a lithium-ion secondary battery, and a lithium-ion secondary battery.

Background Art

Lithium-ion secondary batteries have been widely used in electronic devices such as laptop personal computers (PCs), mobile phones, smartphones, and tablet PCs by virtue of their properties such as small size, light weight, and high energy density. In the background of recent environmental issues such as global worming caused by $CO_2$ emissions, electric vehicles such as clean electric vehicles (EVs) that run only on batteries, hybrid electric vehicles (HEVs) that utilize gasoline engines and batteries in combination, and plug-in hybrid electric vehicles (PHEVs) have become widespread, and lithium-ion secondary batteries (in-vehicle lithium-ion secondary batteries) as batteries mounted on these vehicles has developed.

Input characteristics of lithium-ion secondary batteries are greatly influenced by the performance of negative electrode materials for the lithium-ion secondary batteries. As materials for negative electrode materials for lithium-ion secondary batteries, carbon materials are widely used. For example, as materials for obtaining a high-density negative electrode, carbon materials having a high degree of crystallinity, such as artificial graphite and spherical natural graphite obtained by spheroidizing natural vein graphite, have been proposed.

As for the artificial graphite, for example, Patent Document 1 discloses a negative electrode material for a lithium-ion secondary battery including composite particles, each of the composite particles including spherical graphite particles and a plurality of flat graphite particles that are gathered or bound together such that the flat graphite particles have non-parallel orientation planes.

Citation List

Patent Documents

[Patent Document 1] International Publication No. 2015/147012

SUMMARY OF INVENTION

Technical Problem

Demand for negative electrode materials for lithium-ion secondary batteries has been increasing due to the rapid growth of the EV market. In particular, from the point of improving battery performance, it is desirable to reduce the irreversible capacity during the initial charge/discharge cycle and increase the initial efficiency. There is a strong need for increased rapid charging in order to improve convenience, and high-rate charging is required for negative electrode active materials.

The problem with such high-rate charging is that a part of the lithium ions cannot be inserted between graphite layers due to the IR drop when a large current is applied, and lithium metal tends to deposit on the surface of the graphite particles. When lithium metal is deposited in a needle shape, it may break through the separator, causing an internal short circuit and leading to thermal runaway.

From the above points, it is desirable that a negative electrode material for a lithium-ion secondary battery can restrain the deposition of lithium metal and can produce a lithium-ion secondary battery with excellent lithium (Li) deposition resistance.

An object of the present disclosure is to provide a negative electrode material for a lithium-ion secondary battery capable of manufacturing a lithium-ion secondary battery with excellent initial efficiency, which can restrain the deposition of lithium metal, and with excellent lithium (Li) deposition resistance, and a negative electrode for a lithium-ion secondary battery, and a lithium-ion secondary battery which include the same.

Means for solving the above problems include the following aspects.

<1> A negative electrode material for a lithium-ion secondary battery comprising graphite particles satisfying, in a ratio of R value, which is an intensity ratio Id/Ig of a maximum peak intensity Ig in the range of 1580 cm$^{-1}$ to 1620 cm$^{-1}$ and a maximum peak intensity Id in the range of 1300 cm$^{-1}$ to 1400 cm$^{-1}$ in a Raman spectrum obtained by a Raman spectroscopy measurement, a ratio of the particles with R≥0.2 is 10% by number or more, and an average value of a half width of Id in the top 10 spectra with R values is 60 cm$^{-1}$ or less.

<2> A negative electrode material for a lithium-ion secondary battery comprising graphite particles satisfying, in a ratio of R value, which is an intensity ratio Id/Ig of a maximum peak intensity Ig in the range of 1580 cm$^{-1}$ to 1620 cm$^{-1}$ and a maximum peak intensity Id in the range of 1300 cm$^{-1}$ to 1400 cm$^{-1}$ in a Raman spectrum obtained by a Raman spectroscopy measurement, a ratio of the particles with R≥0.2 is 10% by number or more, and a starting temperature T of a mass reduction reaction due to oxidation of the graphite particles obtained by TG-DTA measurement in a dry air atmosphere is 700° C or more.

<3> The negative electrode material for a lithium-ion secondary battery according to <1> or <2>, wherein the graphite particles includes artificial graphite particles.

<4> The negative electrode material for a lithium-ion secondary battery according to <3>, wherein the artificial graphite particles are particles obtained by graphitizing a mixture containing a graphitizable aggregate, and a graphitizable binder, and the binder contains a water-soluble or water-absorbent polymer compound.

<5> The negative electrode material for a lithium-ion secondary battery according to any one of <1> to <4>, wherein the graphite particles have a circularity of 93% or less.

<6> The negative electrode material for a lithium-ion secondary battery according to any one of <1> to <5>, wherein an oil absorption of the graphite particles is from 40 mL/100g to 70 mL/100g.

<7> The negative electrode material for a lithium-ion secondary battery according to any one of <1> to <6>, wherein, in the graphite particles, the ratio of the particles with R≥0.2 is 80% by number or less.

<8> The negative electrode material for a lithium-ion secondary battery according to any one of <1> to <7>, wherein a surface of the graphite particles is not coated with a low crystalline carbon.

<9> A negative electrode for a lithium-ion secondary battery, comprising: a negative electrode material layer comprising the negative electrode material for a lithium-ion secondary battery according to any one of <1> to <8>, and a current collector.

<10> A lithium-ion secondary battery, comprising: the negative electrode for a lithium-ion secondary battery according to <9>, a positive electrode; and an electrolytic solution.

Advantageous Effects of Invention

The present disclosure can provide a negative electrode material for a lithium-ion secondary battery capable of manufacturing a lithium-ion secondary battery with excellent initial efficiency, which can restrain the deposition of lithium metal, and with excellent lithium (Li) deposition resistance, and a negative electrode for a lithium-ion secondary battery, and a lithium-ion secondary battery which include the same.

DESCRIPTION OF EMBODIMENTS

Embodiments for carrying out the invention will be described below in detail. However, the invention is not limited to the following embodiments. In the following embodiments, components (including elemental steps, etc.) thereof are not essential unless otherwise specified. The same applies to numerical values and ranges, which do not limit the invention.

In the present disclosure, the term "step (process)" encompasses an independent step separated from other steps as well as a step that is not clearly separated from other steps, as long as a purpose of the step can be achieved.

In the present disclosure, a numerical range specified using "(from) ... to ..." represents a range including the numerical values noted before and after "to" as a minimum value and a maximum value, respectively.

In the numerical ranges described in a stepwise manner in the present disclosure, the upper limit value or the lower limit value described in one numerical range may be replaced with the upper limit value or the lower limit value of another numerical range described in a stepwise manner. Further, in the numerical ranges described in the present disclosure, the upper limit value or the lower limit value of the numerical ranges may be replaced with the values shown in the Examples.

In the present disclosure, each component may include plural substances corresponding to the component. In the case in which plural substances corresponding to a component are present in a composition, the content or content rate of the component in the composition means the total content or content rate of the plural substances present in the composition unless otherwise specified.

In the present disclosure, each component may include plural kinds of particles corresponding to the component. In the case in which plural kinds of particles corresponding to a component are present in a composition, the particle size of the component means a value with respect to the mixture of the plural kinds of particles present in the composition, unless otherwise specified.

The term "layer" or "film" as used herein encompasses, when a region in which the layer or the film is present is observed, not only a case in which the layer or the film is formed over the entire observed region, but also a case in which the layer or the film is formed at only a part of the observed region.

The term "layered (stacked)" as used herein means disposing layers on one another, in which two or more layers may be bonded with each other, or may be attachable to/detachable from one another.

In the present disclosure, the particle size distribution of primary particles included in a negative electrode material or composite particles can be measured using a laser diffraction particle size distribution analyzer. The average particle size of particles means a particle size at which the cumulative volume from the small diameter side of a volume-based particle size distribution reaches 50% (D50). D90 means a particle size at which the cumulative volume from the small diameter side of the volume-based particle size distribution reaches 90%, and D10 means a particle size at which the cumulative volume from the small diameter side of the volume-based particle size distribution reaches 10%.

<<Negative Electrode Material of Lithium-Ion Secondary Battery>>

Hereinafter, regarding a negative electrode material for lithium-ion secondary battery of the present disclosure, a negative electrode material for a lithium-ion secondary battery of the first embodiment and a negative electrode material for a lithium-ion secondary battery of the second embodiment will be described in order. However, the present invention is not limited to these embodiments.

[First Embodiment]

A negative electrode material for a lithium-ion secondary battery (hereinafter, also referred to as negative electrode material) according to the first embodiment of the present disclosure includes graphite particles and the graphite particles satisfies, in a ratio of R value, which is an intensity ratio Id/Ig of a maximum peak intensity Ig in the range of 1580 $cm^{-1}$ to 1620 $cm^{-1}$ and a maximum peak intensity Id in the range of 1300 $cm^{-1}$ to 1400 $cm^{-1}$ in a Raman spectrum obtained by a Raman spectroscopy measurement, a ratio (hereinafter, also referred to as "ratio of R≥0.2") of the particles with R≥0.2 is 10% by number or more, and an average value of a half width of Id in the top 10 spectra with R values is 60 $cm^{-1}$ or less.

It is possible to manufacture a lithium-ion secondary battery with excellent initial efficiency, which can restrain the deposition of lithium metal, and with excellent lithium (Li) deposition resistance by using the negative electrode material of the first embodiment. The reason for this is presumed, for example, as follows.

In the Raman spectroscopy measurement, the peak intensity Ig in the range of 1580 $cm^{-1}$ to 1620 $cm^{-1}$ corresponds to a peak identified as corresponding to the graphite crystal structure, and for example, the peak appears around 1580 $cm^{-1}$.

The peak intensity Id in the range of 1300 $cm^{-1}$ to 1400 $cm^{-1}$ corresponds to a peak identified as corresponding to the amorphous carbon structure, and for example, the peak appears around 1360 $cm^{-1}$.

The graphite particles included in the negative electrode material satisfy that the ratio of 0.2 or more in terms of the R value, which is the intensity ratio Id/Ig, is relatively high, i.e., the surface crystallinity of the graphite particles is relatively low. The low surface crystallinity makes it possible to increase the Li deposition resistance without impairing the discharge capacity in a lithium-ion secondary battery using the negative electrode material of the present embodiment.

The graphite particles satisfies that the average value of a half width of Id in the top 10 spectra with R values is 60 $cm^{-1}$ or less. In other words, it means that the half-width of the peak identified as corresponding to the amorphous structure of carbon is relatively narrow for graphite particles with low surface crystallinity included in the negative electrode material. It is presumed that the relatively narrow half width restrains the occurrence of a carbon defect, and restrains the increase in irreversible capacity at the time of initial charging due to the presence of various functional groups in the carbon defect. As a result, a lithium-ion secondary battery using the negative electrode material of the present embodiment tends to have excellent initial efficiency.

In the graphite particles included in the negative electrode material, regarding the ratio of R value, which is the intensity ratio Id/Ig, the ratio of R≥0.2 is 10% by number or more, from the viewpoint of Li deposition resistance of a lithium-ion secondary battery, the ratio of R≥0.2 is preferably 15% by number or more, and more preferably 20% by number or more. When using the graphite particles with the ratio of R≥0.2 is 10% by number or more, the input characteristics of a lithium-ion secondary battery tend to be improved.

In the graphite particles included in the negative electrode material, regarding the ratio of R value, which is the intensity ratio Id/Ig, the ratio of R≥0.2 may be 80% by number or less, or may be 70% by number or less.

The graphite particles satisfies that the average value of a half width of Id in the top 10 spectra with R values is 60 $cm^{-1}$ or less, from the viewpoint of an initial efficiency of a lithium-ion secondary battery, the graphite particles preferably satisfies that the average value is 55$cm^{-1}$ or less, the graphite particles more preferably satisfies that the average value is 50$cm^{-1}$ or less. The storage characteristics of a lithium-ion secondary battery tends to be improved by using the graphite particles satisfying the average value of a half width of Id in the top 10 spectra with R values of 60 $cm^{-1}$ or less.

The graphite particles may satisfy that the average value of a half width of Id in the top 10 spectra with R values is 20 $cm^{-1}$ or more, or 30 $cm^{-1}$ or more.

In the present disclosure, the R value, which is Id/Ig, the ratio of R≥0.2, and the average value of a half width of Id can be measured by the following methods.

The R value of the graphite particles may be determined using a Raman spectrometer (for example, XploRA PLUS manufactured by HORIBA, Ltd.) and performing the measurement of raman spectrum under the following conditions. In this case, the arithmetic mean value of the measured 400 particles is taken as the R value.

- Measurement Conditions on Raman Spectrum-
- Laser wavelength: 532 nm
- Laser intensity: 100 mW or more
- Neutral density filter: 1%
- Irradiation intensity: 1 mW
- Measurement range: 1000 $cm^{-1}$ to 1800 $cm^{-1}$
- Irradiation time: 30 seconds
- Irradiation area : 1 $\mu m^2$
- Baseline (D band): 1100 $cm^{-1}$ to 1470 $cm^{-1}$
- Baseline (G band): 1450 $cm^{-1}$ to 1710 $cm^{-1}$
- Number of accumulated times for one particle: 2 times
- Number of particles measured: 400 particles

It is possible to determine the ratio of the particles with R≥0.2 (% by number) and the ratio of the particles with R<0.2 (% by number) by dividing the R values of the 400 particles measured as described above.

Among the 400 particles whose R values have been measured as described above, each half width of Id in the top 10 spectra with R values is determined. The arithmetic mean of these values is taken as the average value of a half width of Id in the top 10 spectra for R values.

The graphite particles included in the negative electrode material of the present disclosure preferably contain artificial graphite particles from the viewpoint of Li deposition resistance of a lithium-ion secondary battery. The artificial graphite particles are preferably particles obtained by graphitizing a mixture containing a graphitizable aggregate and a graphitizable binder. From the viewpoint that the ratio of R≥0.2 is likely to satisfy 10% by number or more, and from the viewpoint of Li deposition resistance of a lithium-ion secondary battery, the graphitizable binder preferably contains a water-soluble or water-absorbent polymer compound, and more preferably contains an aqueous binder containing a water-soluble or water-absorbent polymer compound.

The water-soluble or water-absorbent polymer compound is not particularly limited, and may, for example, contain at least one selected from the group consisting of starch, amylose, amylopectin, polyacrylic acid, carboxymethylcellulose, polyvinyl alcohol, and water-soluble protein.

It becomes easier to obtain a negative electrode material that satisfies the aforementioned numerical conditions for the R value and the average value of a half width of Id by using artificial graphite particles as the graphite particles, by using a binder containing a water-soluble or water-absorbent polymer compound when graphitizing a mixture containing a graphitizable aggregate and a graphitizable binder to produce artificial graphite particles, or by not applying a treatment to coat a surface of the graphite particles with a low crystalline carbon.

(Average Particle Size)

The particle size (hereinafter, also referred to as "average particle size" or "D50") of the graphite particles at which the cumulative volume from the small diameter side of the volume-based particle size distribution measured by laser diffraction method reaches 50% may be from 5.0 $\mu m$ to 20.0 $\mu m$.

The average particle size of the graphite particles may be 18.0 $\mu m$ or less, or may be 17.0 $\mu m$ or less, from the viewpoint of further improving the Li deposition resistance.

The average particle size of the graphite particles may be 8.0 $\mu m$ or more, or may be 10.0 $\mu m$ or more.

The average particle size of the graphite particles can be measured using a laser diffraction particle size distribution analyzer (for example, SALD3100, manufactured by Shimadzu Corporation).

Examples of measurement method of the average particle size of the graphite particles in a state included in a negative electrode include: a method in which a sample electrode is fabricated, embedded in an epoxy resin, mirror-polished, and observed in its cross-section with a scanning electron microscope (for example, VE-7800 manufactured by Keyence Corporation); and a method in which a cross-section of an electrode prepared using an ion milling apparatus (for example, E-3500, manufactured by Hitachi High-Tech Corporation) is observed using a scanning electron microscope (for example, VE-7800 manufactured by Keyence Corporation). The average particle size in this case is a median value of the particle sizes of 100 randomly selected particles.

(D10)

D10 of the graphite particles may be from 0.1 $\mu$m to 10.0 $\mu$m, may be from 0.5 $\mu$m to 8.0 $\mu$m, and still more preferably from 1.0 $\mu$m to 7.0 $\mu$m and particularly preferably from 3.0 $\mu$m to 7.0 $\mu$m.

D10 of the graphite particles can be measured using a laser diffraction particle size distribution analyzer (for example, SALD3100, manufactured by Shimadzu Corporation).

(Particle Size Distribution D90/D10)

The particle size distribution D90/D10 of the graphite particles is not particularly limited and may be from 2.0 to 7.0, or may be from 2.5 to 6.0.

The particle size distribution D90/D10 can be measured using a laser diffraction particle size distribution analyzer (for example, SALD3100, manufactured by Shimadzu Corporation).

Examples of measurement method of the particle size distribution D90/D10 of the graphite particles in a state included in a negative electrode include: a method in which a sample electrode is fabricated, embedded in an epoxy resin, mirror-polished, and observed in its cross-section with a scanning electron microscope (for example, VE-7800 manufactured by Keyence Corporation); and a method in which a cross-section of an electrode prepared using an ion milling apparatus (for example, E-3500, manufactured by Hitachi High-Tech Corporation) is observed using a scanning electron microscope (for example, VE-7800 manufactured by Keyence Corporation). The particle size distribution D90/D10 in this case can be obtained by the following method.

(1) The area Sn of a projected particle image (n is a particle unique number assigned to the selected particle) is obtained using a binarization method or the like.

(2) The equivalent circle diameter $Ln = \sqrt{Sn / \pi}$ is obtained from the area Sn, assuming that the particle is a true sphere with an ideal shape.

(3) The sphere volume $Vn = (4/3) \pi (Ln)^3$ is obtained based on the equivalent circle diameter Ln.

(4) The processes (1) to (3) are repeated for selected 100 particles.

(5) In the distribution curve in which the vertical axis represents the cumulative value % of volume for 100 particles and the horizontal axis represents the particle size, the particle size at a point at which the curve corresponds to 10% in the horizontal axis is defined as 10% diameter (D10), and the particle size at a point at which the curve corresponds to 90% in the horizontal axis is defined as 90% diameter (D90), whereby D90/D10 can be obtained.

(Standard Deviation of Particle Size Distribution)

The standard deviation of the particle size distribution of the graphite particles may be from 0.18 to 0.40 or may be from 0.25 to 0.35.

The standard deviation of the particle size distribution can be measured using a laser diffraction particle size distribution analyzer (for example, SALD3100, manufactured by Shimadzu Corporation) based on a frequency distribution graph in which the horizontal axis indicates the log scale of the particle size and the vertical axis indicates the amount of particles (%).

($I_{002}/I_{110}$)

A negative electrode is formed using the negative electrode material of the present disclosure, and from the viewpoint of input characteristics in a lithium-ion secondary battery, $I_{002}/I_{110}$, which is the ratio of the peak intensity ($I_{002}$) of the 002 diffraction line and the peak intensity ($I_{110}$) of the 110 diffraction line which are obtained when the negative electrode pressed at 0.8 t/cm is subjected to X-ray diffraction measurement using CuK$\alpha$ rays, is preferably 700 or less, more preferably 600 or less, and still more preferably 500 or less.

The lower limit of $I_{002}/I_{110}$ is not particularly limited and may be 200 or more.

$I_{002}/I_{110}$ can be determined by the method described in Examples. When measuring $I_{002}/I_{110}$, the components other than the graphite particles and their ratios, which are the conditions for manufacturing the negative electrode, and the manufacturing conditions for the negative electrode are the same as the manufacturing conditions described in the method of measuring electrode orientation in Examples.

(250 Times Tap Density)

The 250 times tap density of the graphite particles is preferably 0.80 g/cm$^3$ to 1.20 g/cm$^3$, and more preferably 0.90 g/cm$^3$ to 1.10 g/cm$^3$, from the viewpoint of easily improving the input and output characteristics and energy density in a lithium-ion secondary battery.

The 250 times tap density of the graphite particles can be determined, for example, as follows.

100 cm$^3$ of sample powder of the graphite particles is put into a graduated flat-bottomed test tube (KRS-406, manufactured by Kuramochi Scientific Instruments Co., Ltd.) with capacity of 150cm$^3$, and the graduated flat-bottomed test tube is capped. Then, the value of the density, which is determined from the mass and volume of the sample powder after dropping the graduated flat-bottomed test tube 250 times from a height of 5 cm, is defined as the 250 times tap density.

(Specific Surface Area)

The specific surface area determined by nitrogen adsorption measurement at 77K of the graphite particles is not particularly limited. For example, from the viewpoint of improving rapid charge and discharge characteristics and from the viewpoint of further restraining the decomposition of an electrolytic solution, the specific surface area of the graphite particles is preferably from 0.2 m$^2$/g to 6.0 m$^2$/g, more preferably from 1.5 m$^2$/g to 5.0 m$^2$/g, and still more preferably from 2.0 m$^2$/g to 4.0 m$^2$/g.

The specific surface area determined by nitrogen adsorption measurement at 77K can be determined by the BET method based on the adsorption isotherm obtained by the nitrogen adsorption measurement at 77K. Specifically, the specific surface area can be determined by the method described in the Examples.

The specific surface area of the graphite particles can be adjusted by particle size distribution, particle structure or the like.

The specific surface area of the graphite particles may be adjusted by coating of the graphite particles with low crystalline carbon or the like, or may be adjusted by an amount of an aqueous binder when the aqueous binder is used as a graphitizable binder. When it is desired to make the particle size finer, the specific surface area is greatly increased due to the irregularities caused by the grinding. By coating, the irregularities can be filled with a coating material to make them smooth and thus the specific surface area can be adjusted.

(Circularity)

From the viewpoint of Li deposition resistance of a lithium-ion secondary battery, the circularity of the graphite particles is preferably 95% or less, more preferably 93% or less, and still more preferably 92% or less.

The circularity of the graphite particles may be 85% or more, or may be 88% or more.

The circularity of the graphite particles can be measured with a wet flow type particle size/shape analyzer, and the circularity based on the number at a cumulative 50% (so-called average circularity) may be taken as the circularity.

(Oil Absorption)

The oil absorption of the graphite particles is preferably from 40 mL/100g to 70 mL/100g, and more preferably from 45 mL/100g to 60 mL/100g.

The oil absorption of graphite particles is an index of the amount of pores present inside and on the surface of the particles and voids between particles.

It is considered that when the oil absorption of graphite particles is 60 mL/100g or less, the amount of pores present inside and on the surface of the particles is small, and contact area with electrolyte is sufficiently small. In addition, owing to the small interface, the amount of the binder used for producing a negative electrode can be reduced, whereby electric resistance tends to be reduced and battery performance tends to be improved. Further, owing to the small pore volume, the amount of solvent at the time of drying the electrode can be reduced, which is advantageous in terms of environment and manufacturing cost such as reduction in equipment and electric power involved in the drying.

When the oil absorption of graphite particles is 40 mL/100g or more, increase in the viscosity of the slurry at the time of kneading with a binder and the like owing to the small amount of voids between the particles tends to be restrained. Further, the binder tends to spread favorably, whereby the kneading can be easily carried out. In addition, the spaces between the particles, which allow lithium ions to move, tend to be secured.

In the present disclosure, the oil absorption of graphite particles may be measured by a method described in JIS K 6217-4: 2017 (Carbon Black for Rubber - basic characteristics - section IV: measurement of oil absorption), using linseed oil (for example, manufactured by Kanto Chemical Co., Inc.) as the reagent instead of dibutyl phthalate (DBP).

Specifically, linseed oil is applied to a test powder using a constant rate buret, and a change in the viscosity characteristics is measured using a torque detector. The addition amount of linseed oil per unit mass of the test powder that corresponds to the torque of 70% of the maximum torque generated is regarded as the oil absorption (mL/100 g). As for the measurement apparatus, an absorption tester available from Asahisouken Corporation (product name: S-500), for example, may be used.

The graphite particles may or may not be subjected to surface coating treatment with low crystalline carbon.

In a case in which the surface of the graphite particles is coated with low crystalline carbon, the charge characteristics at low temperatures tend to improve when a lithium-ion secondary battery is produced.

On the other hand, in a case in which the graphite particles are not subjected to surface coating treatment with low crystalline carbon, a possibility of deterioration of storage characteristics tends to be restrained, the deterioration being due to the occurrence of cracks and peelings of the graphite particles during the pressing in the process of fabricating an electrode, which increases the decomposition activity of the electrolytic solution. Further, this has an advantage in expanding flexibility in manufacturing conditions. In addition, when low crystalline carbon does not disposed on the surface in the negative electrode material of the present disclosure, it is possible to restrain lithium metal deposition during charging.

When the graphite particles are artificial graphite particles graphitized using a graphitizable binder including the aforementioned aqueous binder (for example, an aqueous binder including a compound that does not include an aromatic ring such as starch), the compound that does not include an aromatic ring such as starch is difficult to change into graphite. Therefore, the surface crystallinity of the graphite particles tends to be low, and excellent charging characteristics at a low temperature tend to be obtained even if the treatment of coating the surface of the graphite particles with a low crystalline carbon is omitted. As a result, by producing artificial graphite particles using the aforementioned aqueous binder, it is possible to simultaneously simplify the process and improve the charging characteristics.

The aforementioned R value of graphite particles may be from 0.10 to 0.40, or may be from 0.15 to 0.30. In particular, it is preferable that the surface is not treated with low crystalline carbon and it is preferable that the R value is preferably from 0.10 to 0.40, and more preferably from 0.15 to 0.30.

In the present disclosure, a carbon material having an average interplanar spacing ($d_{002}$) as determined by an X-ray diffraction method of less than 0.340 nm is regarded as graphite.

In the present disclosure, as will be described later, particles in which low crystalline carbon is disposed on at least a part of the surface of the graphite particles are also regarded as "graphite particles".

The theoretical value of the average interplanar spacing ($d_{002}$) of graphite crystals is 0.3354 nm, and the closer to this value, the more advanced the graphitization.

From the viewpoint of the initial charge and discharge efficiency and energy density of a lithium-ion secondary battery, the average interplanar spacing ($d_{002}$) is preferably 0.33600 nm or less, more preferably 0.33596 nm or less, and still more preferably 0.33592 nm or less.

From the above viewpoint, the average interplanar spacing ($d_{002}$) of graphite particles is preferably from 0.3354 nm to 0.33600 nm, more preferably from 0.3354 nm to 0.33596 nm, and still more preferably from 0.3354 nm to 0.33592 nm.

The average interplanar spacing ($d_{002}$) can be calculated using Bragg's equation based on the diffraction peak corresponding to the 002 plane of carbon, which appears around the diffraction angle $2\theta$ of 24° to 27° in a diffraction profile obtained by irradiating the test sample with an X-ray (CuK$\alpha$ ray) and carrying out the measurement on the diffraction lines with a goniometer. The measurement of the average interplanar spacing ($d_{002}$) can be performed under the following conditions.

Radiation source: CuK$\alpha$ ray (wavelength = 0.15418 nm)
Output: 40 kV, 20 mA
Sampling width: 0.010°
Scanning range: 10° to 35°
Scanning speed: 0.5°/ min
Bragg's equation: $2d\sin\theta = n\lambda$

Here, d represents the length of a cycle; $\theta$ represents the diffraction angle; n represents the order of reflection; and $\lambda$ represents the wavelength of the X-ray.

<<Particles Structure of Graphite Particles>>

The graphite particles include a state (composite particles) in which a plurality of graphite particles are gathered or bound together, or include composite particles (hereinafter, also referred to as specific composite particles) having a structure in which a plurality of flat graphite particles are stacked.

It is considered that the specific composite particles can reduce the contact area with an electrolytic solution inside the particles, compared to, for example, composite particles having a structure in which the main surfaces of a plurality of flat graphite particles are oriented in random directions, and decomposition of the electrolytic solution can be effectively restrained. Further, it is considered that deformation or breakage of the particles is unlikely to occur even if pressure is applied in the production of a negative electrode, and paths of the electrolytic solution between the particles are likely to be secured. Further, the electrolytic solution located inside the composite particles having a structure in which the main surfaces of the flat graphite particles are oriented in random directions has a complicated migration path and slows down. For this reason, it is considered that even an active material having a larger number of particle interfaces cannot exhibit high input and output performance due to diffusion hindrance. In particular, this tendency is conspicuous under input and output conditions where the C rate is high.

Flat graphite particles, which is included in the specific composite particles, refer to nonspherical graphite particles having anisotropy in shape. Examples of the flat graphite particles include vein, flake, and partially vein graphite particles.

Composite particles mean particles in which primary particles are gathered or bound together. Therefore, each of the specific composite particles has a structure in which a plurality of flat graphite particles are stacked with their main planes facing each other, thereby being gathered or bound together. Accordingly, a plurality of flat graphite particles are stacked almost in parallel to form composite particles. Whether or not the flat graphite particles are stacked or not can be confirmed by microscopic observation.

The state in which a plurality of flat graphite particles are gathered or bound together refers to a state in which two or more flat graphite particles are gathered or bound together. Being bound means that particles are chemically bound to each other either directly or via a carbon substance. Being gathered means that, while the particles are not chemically bound to each other, the particles maintain their shape as an assembled body owing to their shapes or the like.

The flat graphite particles may be gathered or bound together via a carbon substance. Examples of the carbon substance include graphite that results from graphitization of a graphitizable binder, or a carbide. From the viewpoint of mechanical strength, it is preferable that two or more flat graphite particles are bonded togerther via a carbon substance. Whether or not the flat graphite particles are gathered or bound together can be confirmed by, for example, observation by a scanning electron microscope.

In order to reduce the ratio of composite particles having a structure in which the main surfaces of a plurality of flat graphite particles are oriented in random directions, it is preferably that the amount used of binder is as little as possible. Composite particles do not occur in the absence of a binder. On the other hand, when there is an excessive amount of binder, more primary particles are formed around the binder mass, that is, aggregate intermediates in which a plurality of primary particles are coordinated are generated, and the primary particles coordinated to the intermediates are likely to face in a non-parallel state.

A dispersant may be used in order to reduce lumps due to uneven distribution of the binder such as tar or pitch. By using a dispersant, the binder tends to be uniformly dispersed, and lumps of the binder tend to be reduced. Thereby, it is considered that the effect of reducing the proportion of composite particles having a structure in which the main surfaces of a plurality of flat graphite particles are oriented in random directions, will be obtained. In addition, the function of the binder is enhanced, the block moldability is improved, and the blending ratio of the binder can be reduced. Examples of the dispersants include dispersants that can be used in a step (b) described below.

The flat graphite particles and the raw material thereof are not particularly limited, and examples thereof include artificial graphite, natural vein graphite, natural flake graphite, coke and resin. In particular, artificial graphite obtained by graphitizing coke is preferable from the viewpoint of low deformability and a low specific surface area.

When the graphite particles includes the specific composite particles, all of the graphite particles may be the specific composite particles or a part of the graphite particles may be graphite particles other than the specific composite particles.

[Second Embodiment]

A negative electrode material for a lithium-ion secondary battery (hereinafter, also referred to as negative electrode material) according to the second embodiment of the present disclosure includes graphite particles and the graphite particles satisfies, in a ratio of R value, which is an intensity ratio $Id/Ig$ of a maximum peak intensity $Ig$ in the range of $1580\ cm^{-1}$ to $1620\ cm^{-1}$ and a maximum peak intensity $Id$ in the range of $1300\ cm^{-1}$ to $1400\ cm^{-1}$ in a Raman spectrum obtained by a Raman spectroscopy measurement, a ratio of the particles with $R \geq 0.2$ is 10% by number or more, and a starting temperature T of a mass reduction reaction due to oxidation of the graphite particles obtained by TG-DTA measurement in a dry air atmosphere is 700° C or more.

It is possible to manufacture a lithium-ion secondary battery with excellent initial efficiency, which can restrain the deposition of lithium metal, and with excellent lithium (Li) deposition resistance by using the negative electrode material of the second embodiment. The reason for this is presumed, for example, as follows.

The negative electrode material of the present embodiment satisfy that the ratio of 0.2 or more in terms of the R value, which is the intensity ratio $Id/Ig$, is relatively high, i.e., the surface crystallinity of the graphite particles is relatively low as in the negative electrode material of the first embodiment. The low surface crystallinity makes it possible to increase the Li deposition resistance without impairing the discharge capacity in a lithium-ion secondary battery using the negative electrode material of the present embodiment.

The graphite particles satisfy that the starting temperature T of a mass reduction reaction due to oxidation of the graphite particles obtained by TG-DTA measurement (Simultaneous Thermogravimetry - Differential Thermal Analysis measurement) in a dry air atmosphere is 700°C or more. Specifically, using a TG-DTA measuring device, the starting temperature of the mass reduction reaction due to oxidation of the graphite particles (for example, the temperature at which DTA>0) from a TG curve and a DTA curve satisfies 700° C or more. Thereby, there is a tendency that the initial efficiency is excellent and the deposition of lithium metal can be restrained in a lithium-ion secondary battery using the negative electrode material.

The starting temperature of the mass reduction reaction described above may be from 700°C to 800°C, or may be from 700°C to 750°C.

The starting temperature of the mass reduction reaction described above tends to be high when the graphite particles includes artificial graphite particles, whereas the starting temperature of the mass reduction reaction described above tends to be low when the graphite particles are natural graphite particles, or when the graphite particles are subjected to a treatment for coating the surface of the graphite particles with a low crystalline carbon.

The configuration described in the item of the negative electrode material of the first embodiment and the configuration described in the item of the negative electrode material for a lithium-ion secondary battery of the second embodiment may be combined as appropriate.

<<Method of Manufacturing Negative Electrode Material for Lithium-Ion Secondary Battery>>

A method of manufacturing a negative electrode material for a lithium-ion secondary battery, which is one of a method of manufacturing the negative electrode material for a lithium-ion secondary battery of the present disclosure, includes a step of graphitizing coke. More specifically, from the viewpoint of improving handling properties in graphitization treatment and the like, improving cycle characteristics of a lithium-ion secondary battery or the like, the method of manufacturing the negative electrode material for a lithium-ion secondary battery of the present disclosure preferably includes the following steps (a) to (d).

(a) a step of obtaining a mixture containing a graphitizable aggregate (coke), and a graphitizable binder;
(b) a step of obtaining a molded product by molding the mixture;
(c) a step of obtaining a graphitized product by graphitizing the molded product; and
(d) a step of obtaining a ground product by grinding the graphitized product.

Each step in the above method may be performed continuously or not continuously. Each step of the above method may be performed at the same place or at a different place.

The type of coke used in the manufacturing method is not particularly limited, and examples thereof include petroleum or coal-based coke such as fluid coke, needle coke, mosaic coke, and semi-needle coke having intermediate properties between needle coke and mosaic coke.

A method of obtaining coke particles is not particularly limited, and can be carried out by a known method. The particle size of the coke particles is not particularly limited, and can be selected in consideration of the desired particle size, particle structure or the like of the graphite particles. In order to obtain particles with a lower specific surface area, it is preferable to grind in the state of raw coke. Such particles have few voids, cracks or the like due to cleavage, and the compressive load of the graphite particles tends to be high.

In the manufacturing method of the present disclosure, a mixture containing a graphitizable aggregate and a graphitizable binder is obtained, and then the mixture is molded to obtain a molded product. In the manufacturing method of the present disclosure, from the viewpoint of Li deposition resistance of a lithium-ion secondary battery, the graphitizable binder preferably contains a water-soluble or water-absorbent polymer compound, and more preferably contains an aqueous binder containing a water-soluble or water-absorbent polymer compound.

By using the aforementioned aqueous binder, the strength of the molded product is improved, and therefore the handling properties in the subsequent graphitization process or the like are also improved. When the strength of the molded product is improved, the graphitized product generally tends to be difficult to grind after the graphitization process. However, in the above manufacturing method, by using the aforementioned aqueous binder, the strength of the molded product is improved and the graphitized product can be easily ground.

The reason why the graphitized product can be easily ground while improving the strength of the molded product in the above manufacturing method is presumed to be as follows. Note that the present disclosure is not limited to the following presumption.

In the above manufacturing method, the aggregate is absorbed into the binder swollen with water by using an aqueous binder containing a water-soluble or water-absorbent polymer compound. This makes the surface of the graphitizable aggregate slippery when the mixture is molded, promoting the alignment of the mixture and reducing voids. As a result, the density and strength of the molded product tend to improve. Furthermore, the water not absorbed in the binder fills the gaps between the aggregates, resulting in liquid bridges, and thus improving the strength of the molded product.

In the above manufacturing method, the molded product is heat-treated by heat as necessary, and then graphitized to obtain a graphitized product. Water evaporates during heat treatment, graphitization, or the like by using an aqueous binder. Therefore, the molded product before heat treatment, graphitization, or the like has a high density, but the graphitized product after graphitization has a lower density. This makes it easy to grind the graphitized product.

Furthermore, in the above manufacturing method, the graphitized product can be ground more easily, and as a result, a ground product with a small specific surface area can be obtained. By using a negative electrode material containing a ground product having a small specific surface area for manufacturing a lithium-ion secondary battery, the contact area between the negative electrode material and an electrolytic solution can be reduced. Thereby, the decomposition reaction of the electrolytic solution is reduced, and the life of the battery can be lengthened. As a result, the cycle characteristics of the lithium-ion secondary battery are excellent.

Previously, when raw coke was used, there was the problem that molding was difficult and the strength of the molded product was low, and it was necessary to improve the moldability and strength of the molded product by subjecting the raw coke to heat treatment, or the like. On the other hand, in the above manufacturing method, even if raw coke is used without heat treatment, a molded product with excellent moldability and high strength can be obtained. Therefore, as a graphitizable aggregate, raw coke that is heat-treated can be used to form a molded product, or raw coke that is unheat treated can be used to form a molded product.

In the above manufacturing method, since the molded product has excellent strength, it is not necessary to pack the mixture into a graphitization crucible or the like when graphitizing it. In other words, it is not necessary to use a graphitization crucible or the like, and graphitization is possible by placing only the molded product in a graphitization furnace. Therefore, compared to the use of a graphitization crucible or the like, the manufacturing efficiency of the negative electrode material for a lithium-ion secondary battery tends to be excellent.

Usually, the strength of the molded product can be increased by increasing the amount of graphitizable binder. However, when the amount of graphitizable binder is excessive, the density of the graphitized product is high, and the graphitized product tends to be difficult to grind, and the battery characteristics such as the initial charge/discharge efficiency of the negative electrode material tend to decrease. In the present embodiment, it is possible to increase the strength of the molded product without increasing the amount of graphitizable binder, and it is also possible to prevent the deterioration of the battery characteristics due to the excessive use of the binder. Furthermore, by reducing the amount of binder, it becomes easy to apply a hard carbon-derived coating to the surface of the ground product, and the input characteristics of a lithium-ion secondary battery also tend to be improved.

In the step (a), the mixture containing the graphitizable aggregate, and the graphitizable binder is obtained. The mixing is preferably performed at a temperature at which the graphitizable binder softens. Specifically, in a case in which the graphitizable binder is pitch, tar or the like, the temperature may be from 50°C to 300°C, and in a case in which the graphitizable binder is a thermosetting resin, the temperature may be from 20°C to 100°C. When the graphitizable binder is an aqueous binder containing a water-soluble or water-absorbent polymer compound, the mixing may be carried out at room temperature or with heating.

A mixing method is not particularly limited. For example, a method of mixing using a planetary mixer, a kiln mixer, a huddle stirrer or the like is preferred. A kneader or the like that involves kneading may also be used.

When the graphitizable aggregate is in the form of particles, for example, the average particle size (D50) of the graphitizable aggregate is preferably from 5 $\mu$m to 40 $\mu$m, more preferably from 10 $\mu$m to 30 $\mu$m, and still more preferably from 10 $\mu$m to 25 $\mu$m.

For example, the standard deviation of the particle size distribution of the graphitizable aggregate is preferably 0.35 or less, more preferably 0.20 or less, and still more preferably 0.18 or less and particularly preferably 0.16 or less. When the above-mentioned standard deviation of the particle size distribution of the aggregate is 0.35 or less, variation in the particle size of the aggregate is reduced, and variation in the particle size of the obtained ground product is also reduced. By using the negative electrode material, which includes the ground product with small variation in the particle size, in the production of a lithium-ion secondary battery, the resistance distribution in the negative electrode can be made uniform. As a result, the quick charging performance of the lithium-ion secondary battery tends to improve. Further, by reducing the variation in the particle size of the aggregate, the function as a binder can be suitably secured, even if a content rate or a content of the graphitizable binder is reduced. The standard deviation of the particle size distribution is, for example, a value (volume basis) measured by the laser diffraction method.

The lower limit of the standard deviation of the particle size distribution of the graphitizable aggregate is not particularly limited, and for example, may be 0.05 or more, or may be 0.10 or more.

Examples of methods of adjusting the average particle size of the graphitizable aggregate and the standard deviation of the particle size distribution of the graphitizable aggregate to the above-mentioned ranges include sieve classification, wind power classification, wet classification and the like.

The graphitizable binder is not particularly limited as long as it is graphitized by graphitization treatment. Specifically, examples thereof include the aforementioned aqueous binder, coal-based, petroleum-based, or artificial pitch and tar, a thermoplastic resin, a thermosetting resin and the like.

The graphitizable aggregate and the graphitizable binder contained in the mixture may be only one component or two or more components, respectively.

The content of each material in the mixture is not particularly limited. For example, the content of the graphitizable binder may be from 10 parts by mass to 30 parts by mass, may be from 12 parts by mass to 25 parts by mass, or may be from 14 parts by mass to 20 parts by mass, with respect to 100 parts by mass of the graphitizable aggregate. When the above binder is added to a solvent or dispersion medium and used as a solution or dispersion, parts by mass of the solvent or dispersion medium are excluded. When the content of the binder is 10 parts by mass or more, it tends to function favorably as a binder for graphitizable aggregates. When the content of the binder is 30 parts by mass or less, the amount of fixed carbon in the mixture is sufficiently ensured, and the yield tends to be excellent.

The graphitizable aggregate and the graphitizable binder contained in the mixture may be only one component or two or more components, respectively.

The mixture may contain other component(s) other than the graphitizable aggregate, or the graphitizable binder. Examples of other component(s) include an aromatic compound, graphite, a dispersant, and a graphitization catalyst.

The aromatic compound is not particularly limited as long as it is a compound having an aromatic ring. The aromatic compound may be a compound having an aromatic ring and a molecular weight of 500 or less or may be a compound having an aromatic ring and a molecular weight of 300 or less.

Examples of the aromatic compound include naphthalene, methylnaphthalene such as 1-methylnaphthalene, 2-methylnaphthalene or the like, acenaphthene, biphenyl, fluorene, benzopyrene, benzanthracene, dibenzanthracene, diphenylene oxide, quinoline, and isoquinoline.

The aromatic compound contained in the mixture may be only one component or two or more components.

Among them, the aromatic compound is preferably methylnaphthalene or naphthalene from the viewpoint of moldability when molding the molded product.

When the mixture contains the aromatic compound, the amount is not particularly limited. The content rate of the aromatic compound in the mixture is preferably 1% by mass or less, more preferably 0.5% by mass or less, and still more preferably 0% by mass with respect to a total amount of the mixture.

The mixture may contain the graphite. Examples of the graphite include natural graphite and artificial graphite. The graphite is preferably particulate. The mixture may contain only one type of graphite, or may contain two or more types of graphite.

The mixture preferably contains the dispersant from the viewpoint of easily dispersing the components in the mixture in the step (b) described below. When the mixture contains the dispersant, the variation in the particle size of the ground product obtained by grinding the graphitized product can be reduced, and the ground product whose particle size is made uniform can be easily obtained. As a result, the quick charging performance of a lithium-ion secondary battery tends to improve.

Further, the inclusion of the dispersant in the mixture leads to a reduction in the amount of the graphitizable binder, and can be expected to improve battery characteristics such as the initial charge and discharge efficiency of the negative electrode material.

The type of the dispersant is not particularly limited. Specific examples thereof include hydrocarbons such as liquid paraffin, paraffin wax, and polyethylene wax; fatty acids such as stearic acid, oleic acid, erucic acid, and 12-hydroxystearic acid; fatty acid metal salts such as zinc stearate, lead stearate, aluminum stearate, calcium stearate, and magnesium stearate; fatty acid amides such as stearic acid amides, oleic acid amides, erucic acid amides, methylenebisstearic acid amides, and ethylenebisstearic acid amides; fatty acid esters such as stearic acid monoglyceride, stearyl stearate, and hardened oils; higher alcohols such as stearyl alcohol and the like. Among them, fatty acids are preferable, and stearic acid is more preferable, from the viewpoint that they are less likely to affect the performance of the negative electrode material, are easily handled because they are solid at room temperature, are uniformly dispersed to dissolve at the temperature in the step (a), disappear in a process before graphitization treatment, and are inexpensive.

In a case in which the mixture contains the dispersant, the amount thereof is not particularly limited. For example, the content rate of the dispersant with respect to the whole mixture may be from 0.1% by mass to 20% by mass, may be from 0.5% by mass to 10% by mass, or may be from 0.5% by mass to 5% by mass.

The mixture preferably contains the graphitization catalyst from the viewpoint of promoting the graphitization of the graphitizable aggregate or the graphitizable binder. The type of the graphitization catalyst is not particularly limited. Specifically, examples of the graphitization catalysts include substances having a graphitization catalyst action such as silicon, iron, nickel, titanium, and boron; and carbides, oxides, and nitrides of these substances.

In a case in which the mixture contains the graphitization catalyst, the amount thereof is not particularly limited. For example, the content rate of the graphitization catalyst with respect to the whole mixture may be from 0.1% by mass to 50% by mass, may be from 0.5% by mass to 40% by mass, or may be from 0.5% by mass to 30% by mass.

In the step (b), the mixture obtained in the step (a) is molded to obtain the molded product. Preferably, the mixture may be formed into a predetermined shape by a uniaxial press or the like. By molding in this way, it is possible to increase a filling amount in a graphitizing furnace, when graphitizing the mixture, to improve productivity and to improve the effect of the graphitization catalyst.

**In** the step (b), the method of molding the mixture is not particularly limited. Examples of the method include a molding method in which the mixture is placed in a container such as a mold and pressed in a uniaxial direction, a vibration molding method in which the mixture is placed in a container such as a mold, a heavy weight is placed on the upper surface, and vibration and impact are applied to the mold, and an extrusion molding method in which the mixture is extruded from a nozzle or the like with a horizontal push press.

In the step (b), the density of the obtained molded product is not particularly limited, and from the viewpoint of productivity of a negative electrode material and cycle characteristics of a lithium-ion secondary battery, the density is preferably from 0.8 $g/cm^3$ to 1.7 $g/cm^3$, more preferably from 1.0 $g/cm^3$ to 1.5 $g/cm^3$, and still more preferably from 1.2 $g/cm^3$ to 1.5 $g/cm^3$.

The amount of fixed carbon in the graphitizable binder in the mixture is preferably 20% by mass or less, more preferably 15% by mass or less, still more preferably 10% by mass or less, and particularly preferably 5% by mass or less, with respect to a total of 100% by mass of the aggregate and the binder (before graphitization). The lower the amount of fixed carbon in the graphitizable binder in the mixture, the higher the coke ratio in the mixture, which tends to improve the discharge capacity of a lithium-ion secondary battery.

The lower limit of the amount of fixed carbon in the graphitizable binder in the mixture is not particularly limited may be 0.5% by mass or more or may be 1.0% by mass or more, with respect to a total of 100% by mass of the aggregate and the binder (before graphitization).

Heat treatment is preferably performed on the molded product obtained in the step (b) before the molded product is graphitized in the step (c). By performing the heat treatment, an organic component that is contained in the mixture and that does not contribute to the graphitization is removed, and gas generation in the graphitization treatment or the like tends to be reduced.

The temperature of the above-mentioned heat treatment is not particularly limited, and is preferably lower than a heat treatment temperature in the step (c). For example, the above-mentioned heat treatment may be performed in the range of 500°C to 1000°C.

In the step (c), the molded product obtained in the step (b) is graphitized. A method of graphitizing the molded product is not particularly limited as long as the graphitizable components contained in the mixture can be graphitized. For example, a method of heat-treating the mixture in an atmosphere in which the mixture is difficult to oxidize can be mentioned. The atmosphere in which the mixture is difficult to oxidize is not particularly limited, and examples thereof include inert atmospheres such as nitrogen and argon, and vacuum.

For example, the temperature of the heat treatment for the graphitization may be 1500°C or more, may be 2000°C or more, may be 2500°C or more, or may be 2800°C or more. The upper limit of the temperature of the heat treatment is not particularly limited, and for example, may be 3200°C or less. When the temperature of the heat treatment is 1500°C or more, the graphitization tends to proceed easily due to changes in crystals. When the temperature of the heat treatment is 2000°C or more, graphite crystals tend to develop better. On the other hand, when the temperature of the heat treatment for the graphitization is 3200°C or less, sublimation of a part of the graphite tends to be reduced.

In the step (d), the graphitized product obtained in the step (c) is ground to obtain the ground product. The methods of the grinding is not particularly limited, and the grinding can be performed by a known method using a jet mill, a vibration mill, a pin mill, a hammer mill or the like. The ground product may be adjusted in particle size so as to have a desired size. A method of adjusting the particle size is not particularly limited, and examples thereof include a method using the above-mentioned grinding device, a method using a sieve and the like.

As necessary, (e) a step of disposing low crystalline carbon on at least a part of the surface of the ground product, (f) a step of mixing the ground product with other negative electrode active material(s), or the like may be performed to the ground product obtained in the step (d).

Examples of a method of disposing the low crystalline carbon on at least a part of the surface of the ground product in the step (e) include a method of mixing a material capable of being the low crystalline carbon by heat treatment (resin or the like) and the ground product and heat-treating the mixture. In a case in which the low crystalline carbon is disposed on at least a part of the surface of the ground product, input and output characteristics such as rapid charge and discharge characteristics of a lithium-ion secondary battery in which the ground product is used as the negative electrode material tend to be improved.

[Other Step(s)]

The method of manufacturing the negative electrode material of the present disclosure may include a step other than the steps described above.

For example, the method of manufacturing the negative electrode material may include a step of attaching an organic compound to the surface of the secondary particles after graphitization and heat-treating. By attaching an organic compound to the surface of the secondary particles and performing heat treatment, the organic compound attached to the surface changes to low crystalline carbon. Thereby, the surface of the graphite particles can be coated with low crystalline carbon.

The method of attaching an organic compound to the surface of the secondary particles is not particularly limited. Examples thereof include a wet method in which after dispersing and mixing secondary particles in a mixed solution obtained by dissolving or dispersing an organic compound in a solvent, the solvent is removed to adhere the organic compound; and a dry method in which mechanical energy is applied to the mixture obtained by mixing the secondary particles and a solid organic compound to adhere the organic compound.

The organic compound is not particularly limited as long as it can be converted to low crystalline carbon by heat treatment (carbon precursor). Examples include petroleum pitch, naphthalene, anthracene, phenanthroline, coal tar, phenolic resin, polyvinyl alcohol, and the like. The organic compound may be used singly by one type, or may be used in combination of two or more types.

The heat treatment temperature when heat-treating the secondary particles having the organic compound attached to the surface is not particularly limited as long as it is temperature at which the organic compound attached to the surface of the secondary particles is converted to low crystalline carbon, and for example it is preferably from 400°C to 1500°C. From the viewpoint of particularly enhancing high temperature resistance, it is more preferably 1000°C to 1500°C. The heat treatment is preferably performed in an inert gas atmosphere such as a nitrogen atmosphere.

In the step (f), the method of mixing the ground product with other negative electrode active material(s) is not particularly limited. By mixing the ground product with other negative electrode active material(s), the desired characteristics of the lithium-ion secondary battery can be improved as compared with the case in which only the ground product is used as the negative electrode active material. Examples of other negative electrode active material(s) include graphite particles such as natural graphite and artificial graphite, particles containing an element capable of occluding and releasing lithium-ions and are not limited to the above. The element capable of occluding and releasing lithium-ions are not particularly limited, and examples thereof include Si, Sn, Ge, In and the like.

The ground product obtained in the step (f) may include particles in a state in which a plurality of the flat graphite particles is aggregated or bonded, or may include particles (hereinafter, also referred to as graphite secondary particles) in a state in which a plurality of the flat graphite particles is aggregated or bonded such that main surfaces of the flat graphite particles are not parallel to each other.

In a case in which the ground product is in a state of the graphite secondary particles, the phenomenon that the particles of the negative electrode material are oriented along the direction of a current collector when the press is performed to increase the density of the negative electrode, is reduced, and the path of lithium-ions entering and exiting from the negative electrode material tends to be sufficiently secured.

Further, by including the particles in a state in which a plurality of the flat graphite particles is aggregated or bonded, voids between a plurality of the flat graphite particles reduce the effect of pressure applied during pressing to individual graphite particles and disruption of the graphite particles, generation of cracks, or the like tends to be reduced. As a result, there is a tendency that the Li deposition resistance of the lithium-ion secondary battery becomes excellent.

In the present disclosure, "flat graphite particles" refers to non-spheroidal graphite particles having anisotropy in shape. Examples of the flat graphite particles include graphite particles having a scaly shape, a flaky shape, a partially lumpy shape, or the like.

The aspect ratio represented by A/B of the flat graphite particles is preferably, for example, from 1.2 to 20, and is more preferably from 1.3 to 10 when A is a length in a major axis direction and B is a length in a minor axis direction. When the aspect ratio is 1.2 or more, there is a tendency that a contact area between particles increases, and conductivity is further improved. When the aspect ratio is 20 or less, input and output characteristics such as rapid charge and discharge characteristics of the lithium-ion secondary battery tend to be further improved.

The aspect ratio is obtained by observing graphite particles with a microscope, arbitrarily selecting 100 graphite particles, measuring A/B of each of the selected particles, and obtaining an arithmetic mean value of the measured values. In observing the aspect ratio, the length A in the major axis direction and the length B in the minor axis direction are measured as follows. That is, in a projected image of the graphite particles that is observed using a microscope, two parallel tangent lines circumscribing the outer periphery of the graphite particles, which are a tangent line a1 and a tangent line a2 having a maximum distance therebetween, are selected, and a distance between the tangent line a1 and the tangent line a2 is defined as the length A in the major axis direction. In addition, two parallel tangent lines circumscribing the outer periphery of the graphite particles, which are a tangent line b1 and a tangent line b2 having a minimum distance, are selected, and a distance between the tangent line b1 and the tangent line b2 is defined as the length B in the minor axis direction.

In the present disclosure, the phrase "main surfaces are not parallel" regarding the graphite secondary particles means that the largest cross-sectional surfaces (the main surfaces) of a plurality of the flat graphite particles are not aligned in a certain direction. Whether or not the main surfaces of a plurality of flat graphite particles are not parallel to each other can be confirmed by microscopic observation. When a plurality of flat graphite particles is aggregated or bonded in a state in which the main surfaces of the graphite secondary particles are not parallel to each other, there is a tendency that an increase in an orientation index of the main surfaces of the flat graphite particles in the negative electrode is reduced, expansion of the negative electrode due to charging is reduced, and thereby cycle characteristics of the lithium-ion secondary battery is improved.

Graphite secondary particles may partially include a structure in which a plurality of the flat graphite particles is aggregated or bonded such that the main surfaces of the flat graphite particles are parallel to each other.

For example, the average particle size of the flat graphite particles is preferably from 1 μm to 50 μm, more preferably from 1 μm to 25 μm, and still more preferably from 1 μm to 15 μm, from the viewpoint of ease of aggregation or bonding. Examples of a method of measuring the average particle size of the flat graphite particles includes a method of measuring it with a scanning electron microscope, and for example the average particle size of the flat graphite particles is an arithmetic mean value of the particle sizes of 100 flat graphite particles.

The flat graphite particles and the raw material thereof are not particularly limited and examples thereof include artificial graphite, scaly natural graphite, flaky natural graphite, coke, resin, tar, pitch and the like. Among them, graphite obtained from artificial graphite, natural graphite, or coke has high crystallinity and becomes soft particles, so that the density of the negative electrode tends to be easily increased.

The negative electrode material may include spheroidal graphite particles. In a case in which the negative electrode material includes spheroidal graphite particles, because the spheroidal graphite particles themselves have a high density, there is a tendency to reduce the press pressure required to obtain a desired electrode density.

Examples of the spheroidal graphite particles include spheroidal artificial graphite, spheroidal natural graphite and the like. The spheroidal graphite particles are preferably high density graphite particles from the viewpoint of densification of the negative electrode. Specifically, the spheroidal graphite particles that have been subjected to particle spheroidization treatment to increase the tap density are preferable. Further, there is a tendency that the negative electrode material layer containing the spheroidal natural graphite is excellent in peeling strength, and is less likely to peel off from a current collector even if the layer is pressed with strong strength.

In a case in which the negative electrode material includes the spheroidal graphite particles, the negative electrode material may include the above-mentioned flat graphite particles and the spheroidal graphite particles. In a case in which the negative electrode material includes the above-mentioned flat graphite particles and the spheroidal graphite particles, the ratio of the two kinds of particles is not particularly limited, and can be set according to a desired electrode density, pressure conditions at the time of pressing, desired battery characteristics, or the like.

Examples of a case in which the negative electrode material includes the flat graphite particles and the spheroidal graphite particles include a state in which the flat graphite particles and the spheroidal graphite particles are mixed, a state in which the flat graphite particles and the spheroidal graphite particles are bonded (hereinafter, also referred to as composite particles). Examples of the composite particles include particles in a state in which the flat graphite particles and the spheroidal graphite particles are bonded via an organic carbide.

For example, the above-mentioned composite particles can be manufactured by using a mixture containing the flat graphite particles or the raw material thereof and the spheroidal graphite particles as the mixture in the step (a).

<<Negative Electrode Material Composition for Lithium-Ion Secondary Battery>>

A negative electrode material composition for a lithium-ion secondary battery includes the negative electrode material for a lithium-ion secondary battery, a binder, and a solvent. The negative electrode material composition for a lithium-ion secondary battery of the present disclosure may be in the form of a slurry obtained by kneading a negative electrode material for a lithium-ion secondary battery and a binder together with a solvent.

The kneading can be performed by a dispersing device, such as a disper stirrer or a planetary kneader.

The binder used for preparing the negative electrode material composition for a lithium-ion secondary battery is not particularly limited. Examples of the binder include: a styrene-butadiene copolymer (SBR); a homopolymer or copolymer of ethylenically unsaturated carboxylic acid ester, such as methyl acrylate, methyl methacrylate, ethyl acrylate, ethyl methacrylate, butyl acrylate, butyl methacrylate, hydroxyethyl acrylate, or hydroxyethyl methacrylate, or an ethylenically unsaturated carboxylic acid, such as acrylic acid, methacrylic acid, itaconic acid, fumaric acid, or maleic acid; a polymeric compound having high ionic conductivity, such as polyvinylidene fluoride, polyethylene oxide, polyepichlorohydrin, polyphosphazene, polyacrylonitrile, or polymethacrylonitrile. When the negative electrode material composition for a lithium-ion secondary battery contains a binder, the amount of the binder is not particularly limited. For example, the amount may be from 0.5 parts by mass to 20 parts by mass with respect to 100 parts by mass in total of the binder and the negative electrode material for a lithium-ion secondary battery.

The negative electrode material composition for a lithium-ion secondary battery may contain a thickener. Examples of the thickener include carboxymethyl cellulose, methyl cellulose, hydroxymethyl cellulose, ethyl cellulose, polyvinyl alcohol, polyacrylic acid or a salt thereof, oxidized starch, phosphorylated starch, and casein. When the negative electrode material composition for a lithium-ion secondary battery contains a thickener, the amount of the thickener is not particularly limited. For example, the amount may be from 0.1 parts by mass to 5 parts by mass with respect to 100 parts by mass of the negative electrode material for a lithium-ion secondary battery.

The negative electrode material composition for a lithium-ion secondary battery may contain a conductive aid. Examples of the conductive aid include: a carbon material, such as carbon black, graphite, or acetylene black; and an inorganic compound, such as an oxide that exhibits conductivity or a nitride that exhibits conductivity. When the negative electrode material composition for a lithium-ion secondary battery contains a conductive aid, the amount of the conductive aid is not particularly limited. For example, the amount may be from 0.5 parts by mass to 15 parts by mass with respect to 100 parts by mass of the negative electrode material for a lithium-ion secondary battery.

<<Negative Electrode for Lithium-Ion Secondary Battery>>

The negative electrode for a lithium-ion secondary battery of the present disclosure includes: a negative electrode material layer including the negative electrode material for a lithium-ion secondary battery of the present disclosure; and a current collector. The negative electrode for a lithium-ion secondary battery may include other component(s) in addition to the negative electrode material layer including the negative electrode material for a lithium-ion secondary battery of the present disclosure and a current collector, as necessary.

The negative electrode for a lithium-ion secondary battery can be produced, for example, by preparing the negative electrode material composition for a lithium-ion secondary battery of the present disclosure described above and coating it on a current collector to form a negative electrode material layer, or by molding the negative electrode material composition for a lithium-ion secondary battery into a shape such as a sheet or pellet and integrating it with a current collector.

The material for the current collector is not particularly limited, and may be selected from aluminum, copper, nickel, thitanium, stainless steel and the like. The form of the current collector is not particularly limited, and may be selected from a foil, a perforated foil, a mesh and the like. Further, a porous material, such as a porous metal (foamed metal), a carbon paper, or the like may also be used for a current collector.

In the case in which the negative electrode material composition for a lithium-ion secondary battery is applied to a current collector to form a negative electrode material layer, the method thereof is not particularly limtied, and a known method, such as a metal mask printing method, an electrostatic coating method, a dip coating method, a spray coating method, a roll coating method, a doctor blade method, a comma coating method, a gravure coating method, or a screen printing method, may be adopted. After the application of the negative electrode material composition for a lithium-ion secondary battery to the current collector, the solvent contained in the negative electrode material composition for a lithium-ion secondary battery is removed by drying. The drying may be performed using, for example, a hot air dryer, an infrared dryer, or a combination of these devices. If necessary, rolling treatment may be performed on the negative electrode material layer. The rolling treatment can be performed by a method such as using a flat plate press, or a calender roll.

In the case in which the negative electrode material composition for a lithium-ion secondary battery formed in a shape of a sheet, pellet or the like is integrated with a current collector to form a negative electrode material layer, the method for the integration is not particularly limited. For example, the integration can be performed using a roll, a flat plate press, or a combination of these means. The pressure applied upon the integration of the current collector and the negative electrode material composition for a lithium-ion secondary battery is, for example, preferably from around 1 MPa to 200 MPa.

The negative electrode density of the negative electrode material layer is not particularly limited. For example, the negative electrode density is preferably from 1.1 g/cm$^3$ to 1.8 g/cm$^3$, more preferably from 1.1 g/cm$^3$ to 1.7 g/cm$^3$, and further preferably from 1.1 g/cm$^3$ to 1.6 g/cm$^3$. When the negative electrode density is 1.1 g/cm$^3$ or more, increase in electric resistance tends to be restrained, whereby the capacity tends to be increased. When the negative electrode density is 1.8 g/cm$^3$ or less, deterioration in input characteristics and cycle characteristics tends to be restrained.

<<Lithium-Ion Secondary Battery>>

The lithium-ion secondary battery of the present disclosure includes: the negative electrode for a lithium-ion secondary battery of the present disclosure; a positive electrode; and an electrolytic solution.

The positive electrode can be obtained by forming a positive electrode material layer on a current collector in a similar manner to the method of producing a negative electrode described above. Examples of the current collector include those obtained by forming a metal or a metal alloy of aluminum, titanium or stainless steel in a shape of a foil, a perforated foil, a mesh or the like.

The positive electrode material used for forming the positive electrode material layer is not particularly limited. Examples of the positive electrode material include a metallic compound (for example, a metal oxide, a metal sulfide, etc.) and a conductive polymeric material that are capable of accomodating lithium-ion doping or intercalation. More specific examples include: a metal compound, such as lithium cobaltate ($LiCoO_2$), lithium nickelate ($LiNiO_2$), lithium manganate ($LiMnO_2$), a composite oxide thereof ($LiCo_xNi_yMn_zO_2$, $x + y + z = 1$), a composite oxide containing an additional element M' ($LiCo_aNi_b Mn_cM'_dO_2$, $a + b + c + d = 1$, M': Al, Mg, Ti, Zr or Ge), spinel-type lithium manganese oxide ($LiMn_2O_4$), a lithium vanadium compound, $V_2O_5$, $V_6O_{13}$, $VO_2$, $MnO_2$, $TiO_2$, $MoV_2O_8$, $TiS_2$, $V_2S_5$, $VS_2$, $MoS_2$, $MoS_3$, $Cr_3O_8$, $Cr_2O_5$, olivin-type $LiMPO_4$ (M: Co, Ni, Mn, or Fe); a conductive polymer, such as polyacetylene, polyaniline, polypyrrole, polythiophene, or polyacene; a porous carbon; and the like. One type of the positive electrode material may be used singly, or two or more types thereof may be used.

The electrolytic solution is not particularly limited, and those in which a lithium salt as an electrolyte is dissolved in a non-aqueous solvent (a so-called organic electrolytic solution) may be used, for example.

Examples of the lithium salt include $LiClO_4$, $LiPF_6$, $LiAsF_6$, $LiBF_4$, and $LiSO_3CF_3$. One type of the lithium salt may be used singly, or two or more types thereof may be used.

Examples of the non-aqueous solvent include ethylene carbonate, fluoroethylene carbonate, chloroethylene carbonate, propylene carbonate, butylene carbonate, vinylene carbonate, cyclopentanone, cyclohexylbenzene, sulfolane, propanesulton, 3-methylsulfolane, 2,4-dimethylsulfolane, 3-methyl-1,3-oxazolidine-2-one, γ-butyrolactone, dimethyl carbonate, diethyl carbonate, ethyl methyl carbonate, methyl propyl carbonate, butyl methyl carbonate, ethyl propyl carbonate, butyl ethyl carbonate, dipropyl carbonate, 1,2-dimethoxyethane, tetrahydrofuran, 2-methyltetrahydrofuran, 1,3-dioxolane, methyl acetate, ethyl acetate, trimethylphosphate ester, and triethylphosphate ester. One type of the non-aqueous solvent may be used singly, or two or more types thereof may be used.

The form of the positive electrode and the negative electrode in the lithium-ion secondary battery is not particularly limited. For example, the positive electrode, the negative electrode, and an optional separator disposed between the positive electrode and the negative electrode may be spirally wound, or laminated as a flat plate.

The separator is not particularly limited, and for example, a nonwoven fabric, a cloth, a microporous film, or a combination thereof, made of a resin, may be used. Examples of the resin include those containing a polyolefin, such as polyethylene or polypropylene, as a main component. In a case in which the lithium-ion secondary battery has a structure in which the positive electrode and a negative electrode do not contact each other directly, the separator does not need to be used.

The shape of the lithium-ion secondary battery is not particularly limited. Examples include a laminated battery, a paper battery, a button battery, a coin battery, a stacked battery, a cylindrical battery, and a square battery.

The lithium-ion secondary battery of the present disclosure is suitable as a lithium-ion secondary battery having a large capacity used for electric vehicles, power tools, power storage devices and the like.

Examples

Hereinafter, the present disclosure will be described in detail below by way of Examples. However, the invention is not limited to these Examples.

[Example 1]

Petroleum-derived raw coke (needle coke), was used as a raw material for graphite particles.

The above raw coke was coarsely ground with a hammer mill. The crushed material was sieved using a sieve with an opening of 3 mm, and the unsieved material was sieved using a sieve with an opening of 1 mm to recover granules with a particle size of 1 mm to 3 mm.

The obtained coke particles were ground and classified using a roller mill to obtain flat coke particles with D50 of 10.1 μm. The standard deviation (σ) of the particle size distribution of the coke particles was 0.22.

65 parts by mass of the obtained coke particles (90% by mass of fixed carbon), 7 parts by mass of starch (20% by mass of fixed carbon), and 28 parts by mass of water were kneaded using a kneader to obtain a mixture. The amount of binder in Table 1 is calculated as the ratio (%) of the amount of fixed carbon in the binder with respect to the total amount of fixed carbon in the aggregate and the binder.

Next, the obtained mixture was molded at room temperature by a uniaxial press to a density of 1.3 g/cm³ or less to obtain a molded product. Then, the obtained molded product was heat-treated at 850°C for 8 hours in a nitrogen atmosphere, and then graphitized at 3000°C for 30 hours. The obtained graphitized product was ground to obtain particles. Thereafter, the obtained particles were sieved through a 280-mesh screen to obtain graphite particles as a negative electrode material. When the volume-based particle size distribution of the graphite particles was determined using a laser diffraction particle size distribution analyzer (SALD3100, Shimadzu Corporation), D10 was 6.2 μm, D50 was 12.2 μm, and D90 was 18.9 μm.

[Example 2]

A mixture was obtained in the same manner as in Example 1, except that coke particles with D50 of 10.5 μm and the standard deviation (σ) of the particle size distribution of 0.33 were used as flat coke particles. The obtained mixture was then used to obtain graphite particles as a negative electrode material in the same manner as in Example 1.
The volume-based particle size distribution of the graphite particles was determined in the same manner as in Example 1. The results are shown in Table 1.

[Example 3]

A mixture was obtained in the same manner as in Example 1, except that 57 parts by mass of the coke particles (90% by mass of fixed carbon) obtained in Example 1, 15 parts by mass of starch (20% by mass of fixed carbon), and 28 parts by mass of water were kneaded using a kneader to obtain a mixture. The obtained mixture was then used to obtain graphite particles as a negative electrode material in the same manner as in Example 1.
The volume-based particle size distribution of the graphite particles was determined in the same manner as in Example 1. The results are shown in Table 1.

[Example 4]

Flat coke particles were obtained in the same manner as in Example 1, except that petroleum-derived raw coke (mosaic coke) was used as the raw material for the graphite particles. The coke particles had D50 of 9.1 μm and the standard deviation (σ) of the particle size distribution of 0.24. A mixture was obtained in the same manner as in Example 1, except that the flat coke particles obtained in Example 4 were used. The obtained mixture was then used to obtain graphite particles as a negative electrode material in the same manner as in Example 1.
The volume-based particle size distribution of the graphite particles was determined in the same manner as in Example 1. The results are shown in Table 1.

[Comparative Example 1]

The coke particles obtained in Example 1 were packed into a graphitization case without being mixed with a binder, and were fired at 850°C to evaporate the impurities in the mixture, and then graphitized at 3000°C. Thereafter, the particles obtained were sieved through a 280-mesh screen to obtain graphite particles as the negative electrode material.
The volume-based particle size distribution of the graphite particles was determined in the same manner as in Example 1. The results are shown in Table 1.

[Comparative Examples 2 to 4]

Artificial graphite particles were prepared having the volume-based particle size distribution shown in Table 1. The artificial graphite particles prepared in Comparative Examples 2 to 4 were formed by graphitizing a mixture of coke particles and coal tar pitch. In the artificial graphite particles in Comparative Examples 3 and 4, the surfaces of the graphite particles were coated with a low crystalline carbon.

[Table 1]

| | Graphite | Coating treatment | Binder | Amount of binder[%] | D10 [μm] | D50 [μm] | D90 [μm] | D90/D10 [-] |
|---|---|---|---|---|---|---|---|---|
| Example 1 | Artificial | No | Starch | 2.3 | 6.2 | 12.2 | 18.9 | 3.0 |
| Example 2 | Artificial | No | Starch | 2.3 | 4.8 | 11.5 | 21.4 | 4.5 |
| Example 3 | Artificial | No | Starch | 5.5 | 6.9 | 16.2 | 35.5 | 5.2 |
| Example 4 | Artificial | No | Starch | 2.3 | 5.4 | 12.1 | 24.7 | 4.5 |
| Comparative Example 1 | Artificial | No | - | 0 | 4.4 | 9.3 | 17.6 | 4.0 |
| Comparative Example 2 | Artificial | No | Pitch | 10 | 9.6 | 24.9 | 51.4 | 5.4 |
| Comparative Example 3 | Artificial | Yes | Pitch | 10 | 7.4 | 18.8 | 33.4 | 4.5 |
| Comparative Example 4 | Artificial | Yes | Pitch | 8.9 | 6.3 | 11.9 | 27.9 | 4.5 |

Using the negative electrode material obtained in each of Examples and each Comparative Examples, the physical properties shown below were measured and evaluated. The results are shown in Table 2.

(Specific Surface Area)

Nitrogen gas was adsorbed, using a gas adsorption apparatus (ASAP2010, manufactured by Shimadzu Corporation), on a sample obtained by filling a measurement cell with the negative electrode material and performing preheating treatment at 200°C while degassing under vacuum. The obtained sample was subjected to BET analysis by the 5-point method to determine the specific surface area.

(Tap Density)

100 cm$^3$ of sample powder of the graphite particles was put into a graduated flat-bottomed test tube (KRS-406, manufactured by Kuramochi Scientific Instruments Co., Ltd.) with capacity of 150cm$^3$, and the graduated flat-bottomed test tube was capped. The 250 times tap density was determined from the mass and volume of the sample powder after dropping the graduated flat-bottomed test tube 250 times from a height of 5 cm.

(R value)

The R value of the negative electrode material was determined using a Raman spectrometer (for example, XploRA PLUS manufactured by HORIBA, Ltd.) and performing the measurement of raman spectrum under the following conditions. The arithmetic mean value of the measured 400 particles was taken as the R value.

-    Measurement Conditions on Raman Spectrum-
-    Laser wavelength: 532 nm
-    Laser intensity: 100 mW or more
-    Neutral density filter: 1%
-    Irradiation intensity: 1 mW
-    Measurement range: 1000 cm$^{-1}$ to 1800 cm$^{-1}$
-    Irradiation time: 30 seconds
-    Irradiation area : 1 $\mu$m$^2$
-    Baseline (D band): 1100 cm$^{-1}$ to 1470 cm$^{-1}$
-    Baseline (G band): 1450 cm$^{-1}$ to 1710 cm$^{-1}$
-    Number of accumulated times for one particle: 2 times
-    Number of particles measured: 400 particles

(Ratio of Particles with R≥0.2 and Ratio of Particles with R<0.2)

The R values of the 400 particles measured as described above were divided and the ratio of the particles with R≥0.2 (% by number) and the ratio of the particles with R<0.2 (% by number) were determined.

(Average Value of Half Width of Id)

Among the 400 particles whose R values have been measured as described above, each half width of Id in the top 10 spectra with R values was determined, and then the arithmetic mean of these values was determined.

(Measurement of Starting Temperature T of Mass Reduction Reaction due to Oxidation of Graphite Particles)

The starting temperature (oxidation reaction start temperature) T of a mass reduction reaction due to oxidation of the graphite particles included in the negative electrode material was measured by TG-DTA measurement in a dry air atmosphere. Specifically, the weight loss and differential heat were measured in the range from room temperature to 900°C (heating rate 20°C/min) using approximately 20 mg of sample, a Pt pan as a container, and a dry air with a flow rate of 300 ml/min. The temperature at which DTA>0 was determined as the oxidation reaction start temperature T.

(Oil Absorption)

The oil absorption of the negative electrode material was measured by a method described in JIS K 6217-4: 2017 (Carbon Black for Rubber - basic characteristics - section IV: measurement of oil absorption), using linseed oil (for example, manufactured by Kanto Chemical Co., Inc.) as the reagent instead of dibutyl phthalate (DBP).

Specifically, linseed oil was applied to a test powder using a constant rate buret, and a change in the viscosity characteristics was measured using a torque detector. The addition amount of linseed oil per unit mass of the test powder that corresponded to the torque of 70% of the maximum torque generated was regarded as the oil absorption (mL/100 g). As for the measurement apparatus, an absorption tester available from Asahisouken Corporation (product name: S-500) was used.

(Circularity)

The circularity of the negative electrode material was measured with a wet flow type particle size/shape analyzer (FPIA-3000 manufactured by Malvern Instruments Ltd.), and the circularity based on the number at a cumulative 50% (so-called average circularity) was taken as the circularity.

(Electrode Orientation)

A negative electrode of a lithium-ion secondary battery was produced as shown below and the electrode orientation was evaluated under the following conditions.

-Production of Negative Electrode of Lithium-Ion Secondary Battery-

Graphite particles (97.6 parts by mass), carboxymethyl cellulose (CMC) (1.2 parts by mass) and styrene-butadiene rubber (SBR) (1.2 parts by mass) were kneaded to prepare a slurry. This slurry was applied to a glossy surface of an electrolytic copper foil in an amount of 10 g/cm$^2$. After pre-drying at 90°C for 2 hours, the electrode density was adjusted to be 1.65 g/cm$^3$ with a roll press. After that, a curing treatment was performed by drying at 120°C for 4 hours in a vacuum atmosphere and a negative electrode material layer was formed on the electrolytic copper foil to obtain a negative electrode for a lithium-ion secondary battery.

-Evaluation of Electrode Orientation-

The obtained negative electrode for a lithium-ion secondary battery was molded into a strip-shaped sheet having a width of 5 cm and an area of 600 cm$^2$, and the obtained molded product was pressed with a roll-type pressing machine under hydraulic pressure of 4 t. The linear pressure at this time was 4t/5cm=0.8t/cm. The pressed negative electrode was placed in an X-ray diffraction measurement cell, and an X-ray diffraction pattern using CuKα rays was measured using an X-ray diffraction measurement device (X-ray diffraction measurement device manufactured by Rigaku Corporation, X-ray DIFFRACTIOMETER MultiFlex) under the conditions of a scanning speed of 0.25°/min, a tube voltage of 40 kV, a tube current of 30 mA, a divergence slit of 1°, a scattering slit of 1°, and a receiving slit of 0.3 mm (2θ=25.5° to 27.5°, 76.5° to 78.5°). $I_{002}/I_{110}$ (002/110 in Table 2), which is the ratio of the obtained peak intensity of the 002 diffraction line ($I_{002}$) and the peak intensity of the 110 diffraction line ($I_{110}$), was obtained, and this value was taken as the electrode orientation.

(Discharge Capacity)

The lithium-ion secondary battery produced as described above was placed in a constant temperature bath set at 25°C, constant current charging was performed at a current value of 0.2C to a voltage of 0.005V (V vs. Li/Li$^+$), and then constant voltage charging was performed at 0.005V until the current value reached 0.02C. After resting for 30 minutes, constant current discharge was performed at a current value of 0.2 C to a voltage of 1.5 V (V vs. Li/Li$^+$). The discharge capacity at this time was determined.

(Initial Efficiency)

The initial efficiency was determined by the following steps (1) to (3) using the lithium-ion secondary battery prepared as described above.

(1) The battery was charged to 0.005 V (vs. Li/Li+) at a constant current of 0.2 C, and then charged at a constant voltage of 0.005 V until the current value reached 0.02 C. The capacity at this time was taken as the initial charge capacity.
(2) After a rest period of 30 minutes, the battery was discharged to 1.5 V (vs. Li/Li+) at a constant current of 0.2 C. The capacity at this time was taken as the initial discharge capacity.
(3) The initial efficiency was determined from the charge and discharge capacities determined in (1) and (2) above using the following (Equation 1).

$$\text{Initial efficiency (\%)} = (\text{Initial discharge capacity (mAh)} / \text{Initial charge capacity (mAh)}) \times 100 \dots$$

(Equation 1)

...

(SOC-Li (Li Deposition Resistance))

A lithium-ion secondary battery was produced by using the negative electrode obtained above, and the Li deposition resistance was evaluated as follows.

-Production of Lithium-Ion Secondary Battery-

The negative electrode obtained above, metallic lithium as a counter electrode, a mixture of ethylene carbonate/ethyl methyl carbonate (3:7 volume ratio) containing 1 M $LiPF_6$ and vinylene carbonate (VC) (1.0% by mass) as an electrolytic solution, a polyethylene microporous membrane having a thickness of 25 $\mu$m as a separator, and a copper plate having a thickness of 250 $\mu$m as a spacer were used to produce a coin cell as a lithium-ion secondary battery.

-Evaluation of Li Deposition Resistance-

The produced lithium-ion secondary battery was placed in a constant temperature bath set at 25°C, and from the first cycle to the third cycle, constant current charging was performed at a current value of 0.1C to a voltage of 0.005V (V vs. Li/Li$^+$), and then constant voltage charging was performed at 0.005V until the current value reached 0.05C. After resting for 30 minutes, constant current discharge was performed at a current value of 0.2 C to a voltage of 1.5 V (V vs. Li/Li$^+$). The discharge capacity at the 3rd cycle was defined as 1C in the Li deposition test. The charge in the fourth cycle was performed at a current density of 3C so as to charge the battery to the discharge capacity of the third cycle in 20 minutes, and the termination condition was a 1C capacity limit. The first inflection point in the differential profile (dV/dQ, V is voltage, Q is electric capacity) of the charge curve obtained at the 4th cycle was defined as the starting point of Li deposition, and the capacity at this time was expressed as a percentage with respect to the discharge capacity at the 3rd cycle (it may be the charge capacity at the 4th cycle set so as to have the same capacity) to evaluate the Li deposition resistance. The result are shown in Table 2. The higher this percentage, the better the Li deposition resistance.

(Measurement of Direct Current Resistance (DCR))

The direct current resistance (DCR) of the lithium-ion secondary batteries produced in Examples 1 and 4 was measured to determine the input characteristics of the batteries. Specifically, the characteristics are as follows.
Using the negative electrode obtained above, a composite electrode of 94 parts by mass of lithium nickel cobalt manganese oxide ($LiNi_{0.33}Mn_{0.33}Co_{0.33}O_2$), 3 parts by mass of carbon black, and 3 parts by mass of polyvinylidene fluoride was used as a positive electrode, a mixed solution of ethylene carbonate/diethyl carbonate (3:7 volume ratio) containing 1 M $LiPF_6$ and vinylene carbonate (VC) (1.0% by mass) was used as an electrolytic solution, and a polyethylene microporous membrane having a thickness of 25 $\mu$m was used as a separator to produce a single layer laminate full cell (lithium-ion secondary battery).
The lithium-ion secondary battery (single layer laminate full cell) was placed in a thermostatic chamber set at 25°C and charged and discharged for three cycles under the conditions of charge: CC/CV 0.2C 4.2V 0.02C Cut, discharge: CC 0.2C 2.5V Cut.
Next, a constant current charge was performed at a current value of 0.2C up to an SOC of 50%.
The lithium-ion secondary battery was also placed in a thermostatic chamber set at 25°C and constant current charging was performed at 1C, 2C, and 3C for 10 seconds each, the voltage drop ($\Delta$V) at each constant current was measured, and the direct current resistance (DCR) was measured using the following formula.

$$\text{DCR } [\Omega] = \{(2C \text{ voltage drop } \Delta V - 1C \text{ voltage drop } \Delta V) + (3C \text{ voltage drop } \Delta V - 2C \text{ voltage drop } \Delta V)\} / \{(3C \text{ control current value I} - 2C \text{ control current value I}) + (2C \text{ control current value I} - 1C \text{ control current value I})\}$$

In Example 1, it was 1.79$\Omega$, and in Example 4, it was 1.68$\Omega$. The lower the direct current resistance (DCR) value, the better the input characteristics.

(Measurement of High Temperature Storage Retention Rate)

The high temperature storage retention rate of the lithium-ion secondary batteries produced in Examples 1 and 4 was determined. Specifically, it is as follows.

The lithium-ion secondary battery (single layer laminate full cell) after the above DCR measurement was placed in a thermostatic chamber set at 25°C and charged at a constant current of 0.2C until the voltage reached 4.2V, then rested for 30 minutes, and discharged at a constant current of 0.2C until the voltage reached 2.2V. Thereafter, it was charged at a constant current of 0.2C until the voltage reached 4.2V, and this battery was placed in a thermostatic chamber set at 60°C and stored for 10 days.

Thereafter, the battery was placed in a thermostatic chamber set at 25°C and left for 60 minutes, after which it was discharged at a constant current of 0.2C until a voltage reached 2.5V (V vs. Li/Li+). It was then charged at a constant current of 0.2C until a voltage reached 4.2V, and after a 30 minute pause, it was discharged at a constant current of 0.2C until a voltage reached 2.5V.

The high temperature storage retention rate was calculated using the following formula:

High temperature storage retention rate (%) = [(2nd discharge capacity at 25°C after storage at 60°C for 10 days) / (1st discharge capacity at 25°C)] x 100

In Example 1, it was 99.0%, and in Example 4, it was 98.7%. A higher high temperature storage retention rate indicates better high temperature storage characteristics.

[Table 2]

| | Specific surface area [m²/g] | Tap density [g/cm³] | R Value (ave.) [-] | R value (<0.2) [%] | R value (≥0.2) [%] | Average value of half width [cm⁻¹] | Oxidation reaction start temperature [°C] | Oil absorption [mL/100g] | Circularity [%] | Electrode orientation (002/110) [-] | Discharge capacity [mAh/g] | Initial efficiency [%] | Li deposition resistance [%] |
|---|---|---|---|---|---|---|---|---|---|---|---|---|---|
| Example 1 | 2.3 | 0.98 | 0.18 | 68.7 | 31.3 | 42.4 | 728 | 55.5 | 88.7 | 556 | 351 | 94.1 | 27 |
| Example 2 | 3.0 | 1.05 | 0.17 | 78.2 | 21.8 | 51.5 | 720 | 47.4 | 89.8 | 565 | 350 | 93.5 | 23 |
| Example 3 | 2.4 | 0.94 | 0.20 | 57.1 | 42.9 | 43.4 | 741 | 59.7 | 89.6 | 389 | 350 | 92.5 | 35 |
| Example 4 | 2.8 | 0.96 | 0.23 | 36.1 | 63.9 | 43.7 | 735 | 58.5 | 90 | 282 | 349 | 93.1 | 39 |
| Comparative Example 1 | 1.9 | 1.27 | 0.10 | 98.7 | 1.3 | 40.8 | 739 | 33.2 | 91.1 | 1888 | 351 | 94.0 | 17 |
| Comparative Example 2 | 3.6 | 0.93 | 0.11 | 94.7 | 5.3 | 43.0 | 718 | 61.5 | 89.3 | 445 | 363 | 94.1 | 18 |
| Comparative Example 3 | 3.2 | 0.90 | 0.30 | 14.3 | 85.7 | 68.0 | 647 | 71.6 | 91.8 | 376 | 363 | 91.2 | 38 |
| Comparative Example 4 | 1.7 | 0.98 | 0.37 | 1.3 | 98.7 | 104.0 | 672 | 66.3 | 88.2 | 284 | 346 | 89.8 | 43 |

In Table 2, it was confirmed that the initial efficiency and Li deposition resistance of the lithium ion secondary batteries in Examples tended to be excellent.

All documents, patent applications, and technical standards described in the present disclosure are herein incorporated by reference to the same extent as if each individual document, patent application, or technical standard was specifically and individually indicated to be incorporated by reference.

**Claims**

1.    A negative electrode material for a lithium-ion secondary battery comprising graphite particles satisfying, in a ratio of R value, which is an intensity ratio Id/Ig of a maximum peak intensity Ig in the range of 1580 cm$^{-1}$ to 1620 cm$^{-1}$ and a maximum peak intensity Id in the range of 1300 cm$^{-1}$ to 1400 cm$^{-1}$ in a Raman spectrum obtained by a Raman spectroscopy measurement, a ratio of the particles with R≥0.2 is 10% by number or more, and an average value of a half width of Id in the top 10 spectra with R values is 60 cm$^{-1}$ or less.

2.    A negative electrode material for a lithium-ion secondary battery comprising graphite particles satisfying, in a ratio of R value, which is an intensity ratio Id/Ig of a maximum peak intensity Ig in the range of 1580 cm$^{-1}$ to 1620 cm$^{-1}$ and a maximum peak intensity Id in the range of 1300 cm$^{-1}$ to 1400 cm$^{-1}$ in a Raman spectrum obtained by a Raman spectroscopy measurement, a ratio of the particles with R≥0.2 is 10% by number or more, and a starting temperature T of a mass reduction reaction due to oxidation of the graphite particles obtained by TG-DTA measurement in a dry air atmosphere is 700° C or more.

3.    The negative electrode material for a lithium-ion secondary battery according to claim 1 or claim 2, wherein the graphite particles includes artificial graphite particles.

4.    The negative electrode material for a lithium-ion secondary battery according to claim 3, wherein the artificial graphite particles are particles obtained by graphitizing a mixture containing a graphitizable aggregate, and a graphitizable binder, and the binder contains a water-soluble or water-absorbent polymer compound.

5.    The negative electrode material for a lithium-ion secondary battery according to any one of claims 1 to 4, wherein the graphite particles have a circularity of 93% or less.

6.    The negative electrode material for a lithium-ion secondary battery according to any one of claims 1 to 5, wherein an oil absorption of the graphite particles is from 40 mL/100g to 70 mL/100g.

7.    The negative electrode material for a lithium-ion secondary battery according to any one of claims 1 to 6, wherein, in the graphite particles, the ratio of the particles with R≥0.2 is 80% by number or less.

8.    The negative electrode material for a lithium-ion secondary battery according to any one of claims 1 to 7, wherein a surface of the graphite particles is not coated with a low crystalline carbon.

9.    A negative electrode for a lithium-ion secondary battery, comprising: a negative electrode material layer comprising the negative electrode material for a lithium-ion secondary battery according to any one of claims 1 to 8, and a current collector.

10.    A lithium-ion secondary battery, comprising: the negative electrode for a lithium-ion secondary battery according to claim 9, a positive electrode; and an electrolytic solution.

## INTERNATIONAL SEARCH REPORT

International application No.

**PCT/JP2022/029714**

### A. CLASSIFICATION OF SUBJECT MATTER

***H01M 4/587*** (2010.01)i
FI:   H01M4/587

According to International Patent Classification (IPC) or to both national classification and IPC

### B. FIELDS SEARCHED

Minimum documentation searched (classification system followed by classification symbols)

H01M4/587

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2010-135314 A (MITSUBISHI CHEMICAL CORP.) 17 June 2010 (2010-06-17) paragraphs [0011], [0024], [0052] | 1-4, 8-10 |
| X | JP 2005-197002 A (HITACHI, LTD.) 21 July 2005 (2005-07-21) paragraphs [0012], [0018], [0050] | 1-4, 8-10 |
| A | JP 2018-530495 A (ALBEMARLE CORP.) 18 October 2018 (2018-10-18) fig. 6 | 2 |
| A | JP 2008-143731 A (OILES CORP.) 26 June 2008 (2008-06-26) paragraphs [0042]-[0055] | 2 |
| A | JP 2001-229914 A (TOYO TANSO CO., LTD.) 24 August 2001 (2001-08-24) fig. 2 | 2 |
| A | JP 2005-306729 A (CANON KABUSHIKI KAISHA) 04 November 2005 (2005-11-04) | 1-10 |
| A | JP 2010-098020 A (HITACHI POWDERED METALS CO., LTD.) 30 April 2010 (2010-04-30) | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 October 2022** | **25 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/029714**

| Patent document cited in search report | | | Publication date (day/month/year) | Patent family member(s) | | | Publication date (day/month/year) |
|---|---|---|---|---|---|---|---|
| JP | 2010-135314 | A | 17 June 2010 | US | 2011/0262802 | A1 | |
| | | | | paragraphs [0018], [0054], [0082] | | | |
| | | | | WO | 2010/050595 | A1 | |
| | | | | EP | 2352192 | A1 | |
| | | | | CN | 102203989 | A | |
| | | | | KR | 10-2011-0084883 | A | |
| JP | 2005-197002 | A | 21 July 2005 | US | 2005/0142440 | A1 | |
| | | | | paragraphs [0012], [0020], table 1 | | | |
| | | | | FR | 2864708 | A1 | |
| JP | 2018-530495 | A | 18 October 2018 | US | 2018/0190986 | A1 | |
| | | | | fig. 6 | | | |
| | | | | WO | 2017/004363 | A1 | |
| | | | | CA | 2986448 | A1 | |
| | | | | AU | 2016287713 | A1 | |
| | | | | CN | 107708859 | A | |
| | | | | KR | 10-2018-0022695 | A | |
| | | | | CL | 2017003432 | A1 | |
| JP | 2008-143731 | A | 26 June 2008 | (Family: none) | | | |
| JP | 2001-229914 | A | 24 August 2001 | (Family: none) | | | |
| JP | 2005-306729 | A | 04 November 2005 | US | 2003/0006684 | A1 | |
| | | | | US | 2008/0106181 | A1 | |
| | | | | EP | 1245704 | A2 | |
| | | | | EP | 1643020 | A1 | |
| | | | | DE | 60217432 | T2 | |
| | | | | DE | 60221057 | T2 | |
| | | | | KR | 10-2002-0076187 | A | |
| | | | | KR | 10-0533142 | B1 | |
| | | | | CN | 1395270 | A | |
| | | | | CN | 1691241 | A | |
| | | | | JP | 2003-288833 | A | |
| JP | 2010-098020 | A | 30 April 2010 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015147012 A